(19) Europäisches Patentamt / European Patent Office / Office européen des brevets

(11) **EP 3 300 133 B1**

(12) **EUROPEAN PATENT SPECIFICATION**

(45) Date of publication and mention
of the grant of the patent:
**11.03.2026 Bulletin 2026/11**

(21) Application number: **17192328.7**

(22) Date of filing: **21.09.2017**

(51) International Patent Classification (IPC):
*H01M 10/0525* (2010.01)  *H01M 50/124* (2021.01)
*C09J 7/10* (2018.01)  *C09J 7/30* (2018.01)
*H01M 10/0587* (2010.01)  *H01M 50/178* (2021.01)
*H01M 50/55* (2021.01)

(52) Cooperative Patent Classification (CPC):
**H01M 10/0525; C09J 7/10; C09J 7/30;
H01M 50/124; H01M 50/1243;** C09J 2203/33;
C09J 2301/1242; C09J 2301/208; C09J 2301/302;
C09J 2301/304; H01M 10/0587; H01M 50/178;
H01M 50/55; Y02E 60/10; Y02P 70/50

(54) **RECHARGEABLE LITHIUM BATTERY**

WIEDERAUFLADBARE LITHIUMBATTERIE

BATTERIE RECHARGEABLE AU LITHIUM

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **21.09.2016 KR 20160120643**

(43) Date of publication of application:
**28.03.2018 Bulletin 2018/13**

(73) Proprietor: **Samsung SDI Co., Ltd.
Yongin-si, Gyeonggi-do 17084 (KR)**

(72) Inventors:
• **Kim, Sanghyun
17084 Yongin-si, Gyeonggi-do (KR)**
• **Ahn, Jeongchull
17084 Yongin-si, Gyeonggi-do (KR)**

(74) Representative: **Gulde & Partner
Patent- und Rechtsanwaltskanzlei mbB
Berliner Freiheit 2
10785 Berlin (DE)**

(56) References cited:
**EP-A1- 2 822 058     EP-A1- 3 223 356
WO-A1-2016/080143    JP-A- 2007 154 135
US-A1- 2012 115 025   US-A1- 2016 043 361**

• **ANGELA HAMMER: "Application Handbook
Thermal Analysis of Polymers Selected
Applications Thermal Analysis", 22 January 2013
(2013-01-22), XP55598095, Retrieved from the
Internet <URL:https://www.mt.com/dam/
Analytical/ThermalAnalysi/TA-PDF/Part%20of%
20Polymers-Selected%20Applications.pdf>
[retrieved on 20190619]**

## Description

A rechargeable lithium battery is disclosed.

## Description of the Related Art

A lithium polymer battery is manufactured by housing an electrode assembly in a case, injecting an electrolyte solution into the case, and then sealing the case. The electrode assembly may be formed by interposing a separator between positive and negative electrodes and winding them into a jelly-roll shape.

The electrode assembly is fixed and finished by using a finishing material on its outside and then, housed in the case, and the case is sealed after injecting the electrolyte solution into the case.

This lithium polymer battery is weak for an external impact, and thus stability of the lithium polymer battery may be deteriorated.

Documents WO2016/080143A1, US2016/043361A1, US2012/115025A1, JP2007 154135A, EP2822058A1 disclose a battery comprising a tape for adhering the electrode assembly to the casing.

## SUMMARY

The invention is set out in the appended set of claims. An aspect provides a rechargeable lithium battery being suppressed from movement of an electrode assembly in a battery case and thus strong against an external impact and also, being prevented from a shrinkage at a high temperature and thus having no appearance defect.

An aspect provides a rechargeable lithium battery including an electrode assembly and a case housing the electrode assembly, wherein the electrode assembly and the internal surfaces of the case are thermally bonded by a tape adhered to an external surface of the electrode assembly, as defined in claim 1.

The tape may include a polymer having a melting point of about 65 °C to about 100 °C.

The tape may include polyolefin.

A thickness of the tape may range from about 25 $\mu$m to about 55 $\mu$m.

Each of thermal shrinkage ratios of the tape in a machine direction (MD) and a traverse direction (TD) according to Equation 1 may be less than or equal to about 0 %.

[Equation 1]

$$\text{Thermal shrinkage ratio (\%)} = [(LO-L1)/LO] \times 100$$

In Equation 1, LO denotes an initial length of a tape and L1 denotes a length of a tape after being allowed to stand at 100 °C for 2 minutes. Adherence between the case and the tape may range from about 0.5 kgf/25 mm to about 1.5 kgf/25 mm.

An adhesion strength of the tape may range from about 300 gf/mm$^2$ to about 800 gf/mm$^2$.

A tensile strength of the tape may range from about 400 kgf/cm$^2$ to about 700 kgf/cm$^2$.

An elongation ratio of the tape may range from about 100 % to about 750 %.

The tape includes an adhesion layer having one surface adhered to the electrode assembly and a heat-bonding layer thermally bonded to an internal surface of the case.

The heat-bonding layer may include a polymer having a melting point of about 65 °C to about 100 °C.

The adhesion layer may include at least one of an acryl-based adhesive and a hot-melt adhesive.

A thickness of the heat-bonding layer may have a ratio of about 40 % to about 90 % relative to a total thickness of the tape.

The tape includes a first adhesion layer having one surface adhered to the electrode assembly, a base layer disposed on the other surface of the first adhesion layer, a second adhesion layer having one surface adhered to the base layer, and a heat-bonding layer disposed on the other surface of the second adhesion layer and thermally bonded to an internal surface of the case.

The first adhesion layer and the second adhesion layer may include at least one of an acryl-based adhesive and a hot-melt adhesive, respectively.

The base layer may include a non-woven fabric, a polymer having a higher melting point than a polymer of the heat-bonding layer, or a combination thereof.

The polymer having a higher melting point than the polymer of the heat-bonding layer may include at least one of polyethylene terephthalate (PET), polybutylene terephthalate (PBT), polypropylene (PP), polyimide (PI), and a liquid crystalline polymer (LCP) resin.

The tape may further include an outmost tape adhered to an upper and/or lower surface of the electrode assembly.

The tape may include a front tape attached on one external surface of the electrode assembly, a rear tape attached on the other surface of the electrode assembly, or a combination thereof, and the electrode assembly is adhered to the internal surface of the case by the front tape, the rear tape, or the combination thereof.

Other aspects are included in the following detailed description.

The electrode assembly is suppressed from movement in the battery case and thus may be strong against an external impact and also, is prevented from shrinkage at a high temperature and thus may realize a rechargeable lithium battery having no appearance defect.

## BRIEF DESCRIPTION OF THE DRAWINGS

FIG. 1 is a perspective view showing a rechargeable lithium battery according to an embodiment before thermal adhering.

FIG. 2 is a cross-sectional view showing a cross-section structure of a tape not according to the invention.

FIG. 3 is a cross-sectional view showing a cross-section structure of a tape according to the invention.

FIG. 4 is a cross-sectional view showing a cross-section structure of a tape not according to the invention.

FIG. 5 is a top plan view showing a rechargeable lithium battery according to another embodiment.

FIG. 6 is a photograph showing disassembled rechargeable lithium battery cells according to Example 1 and Comparative Example 1.

## DETAILED DESCRIPTION

Hereinafter, embodiments are described in detail. However, these embodiments are exemplary, and the present disclosure is not limited thereto but defined by the scope of claims.

A rechargeable lithium battery according to an embodiment includes an electrode assembly and a case housing the electrode assembly, wherein the electrode assembly and the internal surface of the case by a tape attached on the external surface of the electrode assembly may be thermally adhered to be an integrated one body. The rechargeable lithium battery having one body structure integrated through adhesion of the electrode assembly to the internal surface of the case by the tape may be prevented from shrinkage of the electrode assembly at a high temperature or in an electrolyte solution and thus minimized from an appearance defect as well as suppressed from movement of the electrode assembly in the battery case and thus strong against an external impact and improve battery stability.

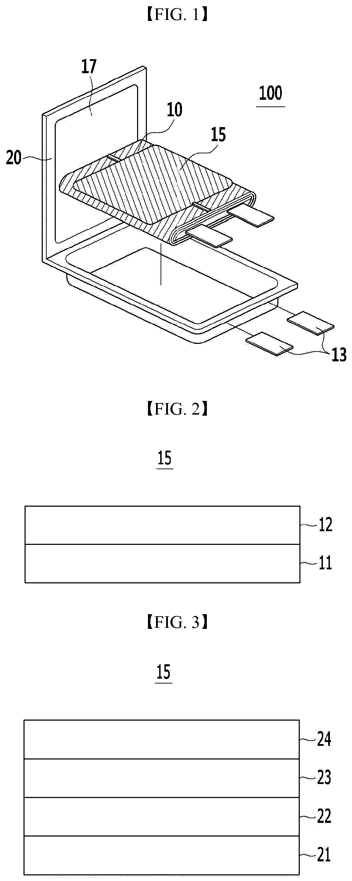

Specifically, the rechargeable lithium battery before thermally adhering the electrode assembly to the internal surface of the case is illustrated referring to FIG. 1.

FIG. 1 is a schematic view showing a rechargeable lithium battery according to an embodiment before thermal adhering. In FIG. 1, the rechargeable lithium battery is exemplarily a pouch-type rechargeable lithium battery, but the present disclosure is not limited thereto.

Referring to FIG. 1, the rechargeable lithium battery 100 according to an embodiment includes an electrode assembly 10, a tape 15 adhered to an external surface of the electrode assembly 10, a case 20 housing the electrode assembly 10, and an electrode tab 13 that provides an electrical path to externally draw currents generated in the electrode assembly 10. The case 20 is sealed by overlapping the two sides facing each other. An electrolyte solution is injected inside the case 20 housing the electrode assembly 10.

The electrode assembly 10 includes a positive electrode, a negative electrode facing the positive electrode, and a separator disposed between the positive electrode and the negative electrode, wherein the positive electrode, the separator, and the negative electrode are sequentially wound so that the electrode assembly 10 may have a jelly-roll shape.

The electrode assembly 10 and the internal surface 17 of the case 20 may be thermally adhered by the tape 15 attached on the external surface of the electrode assembly 10.

The tape 15 may be attached on the external surface of the electrode assembly 10 and thermally adhere the electrode assembly 10 to the internal surface 17 of the case 20. The tape 15 according to an embodiment may be formed of the same material as the internal surface 17 of the case 20. In other words, the material of the tape 15 may include a polymer having a low melting point, for example, a polymer having a melting point of about 65 °C to about 100 °C.

The polymer having a low melting point may be polyolefin, polyurethane and an ethylene vinylacetate (EVA) resin. The polyolefin may include polypropylene, polyethylene, or a combination thereof. The polyolefin may be elongated polyolefin, non-elongated polyolefin, or a combination thereof.

When the electrode assembly 10 has a transformed jelly-roll shape or increased movement in the case 20, a short circuit in a battery may occur and thus deteriorate performance of the battery. However, the rechargeable lithium battery according to an embodiment includes a tape attached on the external surface of an electrode assembly and accordingly, may maintain a jelly-roll shape of the electrode assembly despite an external impact, and in addition, be prevented from movement of the electrode assembly and thus from performance degradation.

In FIG. 1, the tape 15 according to an embodiment is attached on an external surface finishing the jelly-roll-shaped electrode assembly 10, but the present invention is not limited thereto.

In other words, the tape 15 may include a front tape attached on one external surface finishing the electrode assembly 10, a rear tape attached on the other surface of the external surface finishing the electrode assembly 10, or a combination thereof. Accordingly, the electrode assembly may be thermally adhered to one internal surface of the case by the front tape, to the other internal surface of the case by the rear tape, or to both of the internal surfaces of the case by the front tape and the rear tape.

The tape may have a stack structure. The stack-structured tape may be described referring to FIGS. 2 to 4. FIGS. 2 to 4 show examples of the stack-structured tape, but the present disclosure is not limited thereto.

FIG. 2 is a cross-sectional view showing a cross-sectional structure of a tape not according to the invention.

Referring to FIG. 2, the tape 15 includes an adhesion layer 11 having one surface adhered to the electrode assembly 10 and a heat-bonding layer 12 disposed on the other surface of the adhesion layer 11 and thermally adhered to an internal surface 17 of the case 20.

When the tape 15 including the heat-bonding layer 12 formed of the polymer having a low melting point and attached on the internal surface 17 of the case 20 is used, the electrode assembly may be suppressed from movement in the case and thus stable about an external impact and also prevented from shrinkage at a high temperature or in an electrolyte solution and thus control an appearance defect of a battery.

In an embodiment, the thermal adhesion may be for example, performed through a heat press at greater than or equal to about 60 °C under a pressure of greater than or equal to about 100 kgf. For example, in an embodiment, when a non-elongated polypropylene tape is included, the hot press may be performed at greater than or equal to about 100 °C under a pressure of greater than or equal to about 100 kgf, and when a hot-melt resin tape is included, the hot-press may be performed at greater than or equal to about 60 °C under a pressure of greater than or equal to about 100 kgf.

The tape 15 has adhesive property during the heat press and accordingly, may reinforce an adherence force between the electrode assembly 10 and the internal surface 17 of the case and thus suppress movement of the electrode assembly in the case despite an external impact as well as stably maintain the wound jelly-roll shape of the electrode assembly. In addition, the electrode assembly may be prevented from a shrinkage at a high temperature or in an electrolyte solution and thus prevent an appearance defect of a battery.

FIG. 3 is a cross-sectional view showing a cross-section structure of a tape according to the invention.

Referring to FIG. 3, the tape 15 includes a first adhesion layer 21 having one surface adhered to the electrode assembly 10, a base layer 22 disposed on the other surface of the first adhesion layer 21, a second adhesion layer 23 having one surface adhered to the base layer 22, and a heat-bonding layer 24 disposed on the other surface of the second adhesion layer 23 and thermally bonded to an internal surface 17 of the case 20.

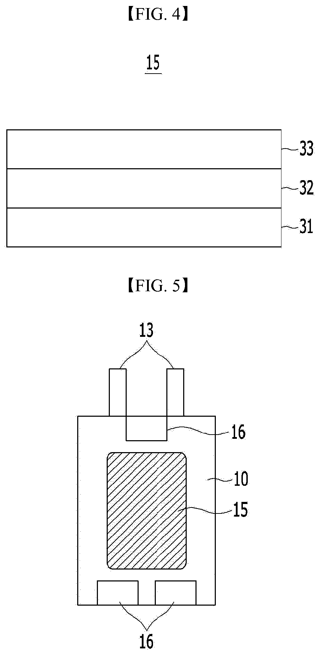

FIG. 4 is a cross-sectional view showing a cross-section structure of a tape not according to the invention.

Referring to FIG. 4, the tape 15 may include an adhesion layer 31 having one surface adhered to the electrode assembly 10, a base layer 32 disposed on the other surface of the adhesion layer 31, and a heat-bonding layer 33 disposed on the other surface of the base layer 32 and thermally bonded to an internal surface 17 of the case 20.

When the tape 15 having the stack structure shown in FIGS. 2 to 4 is used to thermally adhere the electrode assembly to the internal surface of the case, the electrode assembly may be suppressed from movement in the battery case due to strong adherence of the electrode assembly to the case internal surface. Accordingly, the electrode assembly may be strong against an external impact such as a battery fall and the like and thus improve battery stability. In addition, the electrode assembly may be prevented from a shrinkage at a high temperature or in an electrolyte solution and thus minimize an appearance defect of a battery.

In the stack structure of the tape 15 shown in FIGS. 2 to 4, a heat-bonding layer directly bonded to the internal surface of the case may include a polymer having a low melting point and specifically, for example, a polymer having a melting point of about 65 °C to about 100 °C. Examples of the polymer are the same as described above.

The adhesion layers 11 and 31 and the first adhesion layer 21 adhered to the electrode assembly in the stack structures shown in FIGS. 2 to 4 and the second adhesion layer 23 between the base layer 22 and the heat-bonding layer 24 in the stack structure of FIG. 3 may respectively include at least one of an acryl-based adhesive and a hot-melt adhesive.

When the adhesion layers 11 and 31 and the first adhesion layer 21 include the adhesive material, the electrode assembly may be externally well finished and is integrated with the case and thus be stable about an external impact and prevent an appearance defect of a battery.

In addition, in FIG. 3, when the second adhesion layer 23 is formed of the material, adherence of the base layer 22 to the heat-bonding layer 24 may be reinforced, and accordingly, the electrode assembly is integrated with the case and thus may be stable about an external impact and prevent an appearance defect.

In a stack structure of FIGS. 3 and 4, the base layers 22 and 32 may include a non-woven fabric, a polymer having a higher melting point than a polymer of the heat-bonding layer, or a combination thereof. The polymer having a higher melting point than the polymer of the heat-bonding layer according to an embodiment may be polyethylene terephthalate (PET), polybutylene terephthalate (PBT), polypropylene(PP), polyimide (PI), a liquid crystalline polymer resin (LCP), or a combination thereof.

According to an embodiment, the base layers 22 and 32 may support the heat-bonding layers 24 and 33 and maintain their shapes when the heat-bonding layers 24 and 33 are molten by heat and thus play a role of suppressing elongation of the tape 15. In addition, the base layers 22 and 32 include the above material and thus may reinforce an adherence force of the first and second adhesion layers 21 and 23 and an adherence force of the adhesive layer 31 and the heat-bonding layer 33, and accordingly, the electrode assembly and the case may be integrated and thus be strong about an external impact and also, prevent an appearance defect.

According to an embodiment, the tape having a stack structure may have a thickness ranging from about 25 $\mu$m to about 55 $\mu$m. When the tape has a thickness within the range, the electrode assembly has excellent adherence to the internal surface of the case and may be stable about an external impact such as a battery fall and the like and also, may be prevented from a shrinkage at a high temperature or in an electrolyte solution and thus control an appearance defect of a battery.

In addition, a thickness of the heat-bonding layer according to an embodiment may be about 40 % to about 90 % based on a total thickness of the tape. When the heat-bonding layer has a thickness within the range, the electrode assembly may be suppressed from movement in the case and thus stable about an external impact and also, prevented from shrinkage at a high temperature or in an electrolyte solution and thus control an appearance defect of a battery.

Each thermal shrinkage ratio of the tape according to an embodiment in a machine direction (MD) and a transverse direction (TD) according to Equation 1 may be less than or equal to about 0 %. When the tape has a thermal shrinkage ratio within the range, excellent adherence may be obtained during the heat press, and the electrode assembly may be prevented from shrinkage at a high temperature or in an electrolyte solution.

[Equation 1]

$$\text{Thermal shrinkage ratio (\%)} = [(LO-L1)/LO] \times 100$$

In Equation 1, LO denotes an initial length of a tape and L1 denotes a length of a tape after being allowed to stand at 100 °C for 2 minutes.

According to an embodiment, an adherence force of the case to the tape may be in a range of about 0.5 kgf/25 mm to about 1.5 kgf/25 mm. When the adherence force is within the range, the electrode assembly may be effectively suppressed from movement in the battery case.

An adhesion strength of the tape may range from about 300 gf/mm$^2$ to about 800 gf/mm$^2$. When the adhesion strength is within the range, an excellent adherence force may be obtained during the heat press.

A tensile strength of the tape may range from about 400 kgf/cm$^2$ to about 700 kgf/cm$^2$. When the tensile strength is within the range, an excellent adherence force may be obtained during the heat press.

An elongation ratio of the tape may range from about 100 % to about 750 %. When the elongation ratio is within the range, an excellent adherence force may be obtained during the heat press.

FIG. 5 is a top plan view showing a rechargeable lithium battery according to another embodiment. For example, FIG. 5 is a top plan view showing a rechargeable lithium battery including an electrode assembly.

Referring to FIG. 5, the electrode assembly 10 according to an embodiment may further include an outmost tape 16 attached on the upper surface and/or the lower surface of the electrode assembly 10. The outmost tape 16 according to an embodiment may be attached as an insulation tape on the upper surface and/or the lower surface of the electrode assembly, for example, bent and attached along a partial or whole edge of the electrode assembly 10.

In addition, the outmost tape 16 according to an embodiment may be overlapped with the tape 15 on the external surface of the electrode assembly 10. Particularly, the outmost tape 16 according to an embodiment may further reinforce stability of a pouch-type rechargeable battery.

The outmost tape 16 of FIG. 5 may be attached in a predetermined distance between tabs 13 on the upper surface of the electrode assembly 10 and on the lower surface of the electrode assembly 10 with predetermined intervals to finish upper and lower exposed regions but is not limited thereto.

The positive electrode of the electrode assembly according to an embodiment includes a current collector and a positive active material layer formed on the current collector. The positive active material layer includes a positive active material, a binder, and optionally a conductive material.

The current collector may include Al (aluminum), but is not limited thereto.

The positive active material may include lithiated intercalation compounds that reversibly intercalate and deintercalate lithium ions. Specifically, at least one composite oxide of lithium and a metal of cobalt, manganese, nickel, or a combination thereof may be used, and specific examples thereof may be a compound represented by one of the following Chemical Formulae:

$Li_aA_{1-b}B_bD_2$ (wherein, in the chemical formula, $0.90 \le a \le 1.8$ and $0 \le b \le 0.5$); $Li_aE_{1-b}B_bO_{2-c}D_c$ (wherein, in the chemical formula, $0.90 \le a \le 1.8$, $0 \le b \le 0.5$, $0 \le c \le 0.05$); $LiE_{2-b}B_bO_{4-c}D_c$ (wherein, in the chemical formula, $0 \le b \le 0.5$, $0 \le c \le 0.05$); $Li_aNi_{1-b-c}Co_bB_cD_\alpha$ (wherein, in the chemical formula, $0.90 \le a \le 1.8$, $0 \le b \le 0.5$, $0 \le c \le 0.05$, $0 < \alpha \le 2$); $Li_aNi_{1-b-c}Co_bB_cO_{2-\alpha}F_\alpha$ (wherein, in the chemical formula, $0.90 \le a \le 1.8$, $0 \le b \le 0.5$, $0 \le c \le 0.05$, $0 < \alpha < 2$); $LiNi_{1-b-c}Co_bB_cO_{2-\alpha}F_2$ (wherein, in the chemical formula, $0.90 \le a \le 1.8$, $0 \le b \le 0.5$, $0 \le c \le 0.05$, $0 < \alpha < 2$); $Li_aNi_{1-b-c}Mn_bB_cD_\alpha$ (wherein, in the chemical formula, $0.90 \le a \le 1.8$, $0 \le b \le 0.5$, $0 \le c \le 0.05$, $0 < \alpha \le 2$); $Li_aNi_{1-b-c}Mn_bB_cO_{2-\alpha}F_\alpha$ (wherein, in the chemical formula, $0.90 \le a \le 1.8$, $0 \le b \le 0.5$, $0 \le c \le 0.05$, $0 < \alpha < 2$); $Li_aNi_{1-b-c}Mn_bB_cO_{2-\alpha}F_2$ (wherein, in the chemical formula, $0.90 \le a \le 1.8$, $0 \le b \le 0.5$, $0 \le c \le 0.05$, $0 < \alpha < 2$); $Li_aNi_bE_cG_dO_2$ (wherein, in the chemical formula, $0.90 \le a \le 1.8$, $0 \le b \le 0.9$, $0 \le c \le 0.5$, $0.001 \le d \le 0.1$); $Li_aNi_bCo_cMn_dGeO_2$ (wherein, in the chemical formula, $0.90 \le a \le 1.8$, $0 \le b \le 0.9$, $0 \le c \le 0.5$, $0 \le d < 0.5$, $0.001 \le e \le 0.1$); $Li_aNiG_bO_2$ (wherein, in the chemical formula, $0.90 \le a \le 1.8$, $0.001 \le b \le 0.1$); $Li_aCoG_bO_2$ (wherein, in the chemical formula, $0.90 \le a \le 1.8$, $0.001 \le b \le 0.1$); $Li_aMnG_bO_2$ (wherein, in the chemical formula, $0.90 \le a \le 1.8$, $0.001 \le b \le 0.1$); $Li_aMn_2G_bO_4$ (wherein, in the chemical formula, $0.90 \le a \le 1.8$, $0.001 \le b \le 0.1$); $QO_2$; $QS_2$; $LiQS_2$; $V_2O_5$; $LiV_2O_5$; $LiIO_2$; $LiNiVO_4$; $Li_{(3-f)}J_2(PO_4)_3$ ($0 \le f \le 2$); $Li_{(3-f)}Fe_2(PO_4)_3$ ($0 \le f \le 2$); and $LiFePO_4$.

In the chemical formulae, A is Ni, Co, Mn, or a combination thereof; B is Al, Ni, Co, Mn, Cr, Fe, Mg, Sr, V, a rare earth element, or a combination thereof; D is O, F, S, P, or a combination thereof; E is Co, Mn, or a combination thereof; F is F, S, P, or a combination thereof; G is Al, Cr, Mn, Fe, Mg, La, Ce, Sr, V, or a combination thereof; Q is Ti, Mo, Mn, or a combination thereof; I is Cr, V, Fe, Sc, Y, or a combination thereof; and J is V, Cr, Mn, Co, Ni, Cu, or a combination thereof.

The compounds may have a coating layer on the surface or may be mixed with another compound having a coating layer. The coating layer may include at least one coating element compound selected from the group consisting of an oxide of a coating element, a hydroxide of a coating element, an oxyhydroxide of a coating element, an oxycarbonate of a coating element, and a hydroxyl carbonate of a coating element. The compound of the coating layer may be amorphous or crystalline. The coating element of the coating layer may include Mg, Al, Co, K, Na, Ca, Si, Ti, V, Sn, Ge, Ga, B, As, Zr, or a mixture thereof. The coating layer may be disposed in a method having no adverse influence on properties of a positive active material by using these elements in the compound. For example, the method may include any coating method such as spray coating, dipping, and the like, but is not illustrated in more detail since it is well-known in the related field.

The binder improves binding properties of positive active material particles with one another and with a current collector. Specific examples may include polyvinyl alcohol, carboxylmethyl cellulose, hydroxypropyl cellulose, diacetyl cellulose, polyvinyl chloride, carboxylated polyvinylchloride, polyvinylfluoride, an ethylene oxide-containing polymer, polyvinylpyrrolidone, polyurethane, polytetrafluoroethylene, polyvinylidene fluoride, polyethylene, polypropylene, a styrene-butadiene rubber, an acrylated styrene-butadiene rubber, an epoxy resin, nylon, and the like, but are not limited thereto.

The conductive material is included to provide electrode conductivity. Any electrically conductive material may be used as a conductive material unless it causes a chemical change. Examples of the conductive material may be natural graphite, artificial graphite, carbon black, acetylene black, ketjen black, a carbon fiber, , a metal powder or a metal fiber of copper, nickel, aluminum, silver, and the like, a conductive polymer such as a polyphenylene derivative, or a mixture thereof.

The negative electrode of the electrode assembly includes a negative current collector and a negative active material layer disposed on the negative current collector.

The negative current collector may use a copper foil.

The negative active material layer includes a negative active material, a binder, and optionally a conductive material.

The negative active material includes a material that reversibly intercalates/deintercalates lithium ions, a lithium metal, lithium metal alloy, a material being capable of doping and dedoping lithium, or a transition metal oxide.

The material that reversibly intercalates/deintercalates lithium ions includes a carbon material. The carbon material may be any generally-used carbon-based negative active material in a lithium ion rechargeable battery. Examples of the carbon material include crystalline carbon, amorphous carbon, and mixtures thereof. The crystalline carbon may be non-shaped, or sheet, flake, spherical, or fiber shaped natural graphite or artificial graphite. The amorphous carbon may be soft carbon (carbon fired at low temperature) or hard carbon, a mesophase pitch carbonized product, fired coke, and the like.

The lithium metal alloy include lithium and an element selected from Na, K, Rb, Cs, Fr, Be, Mg, Ca, Sr, Si, Sb, Pb, In, Zn, Ba, Ra, Ge, Al, and Sn.

The material being capable of doping and dedoping lithium may include Si, $SiO_x$ ($0 < x < 2$), a Si-C composite, a Si-Y alloy (wherein Y is an element selected from an alkali metal, an alkaline-earth metal, Groups 13 to 16 elements, a transition metal, a rare earth element, and a combination thereof, and not Si), Sn, $SnO_2$, Sn-C composite, Sn-Y alloy (wherein Y is an element selected from an alkali metal, an alkaline-earth metal, Groups 13 to 16 elements, a transition metal, a rare earth element, and a combination thereof and not Sn), and the like. At least one of these materials may be mixed with $SiO_2$. The element Y may be selected from Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Tl, Ge, P, As, Sb, Bi, S, Se, Te, Po, and combination thereof.

The transition metal oxide includes a vanadium oxide, a lithium vanadium oxide, and the like.

The binder improves binding properties of negative active material particles with one another and with a current collector. Examples thereof may be polyvinyl alcohol, carboxylmethyl cellulose, hydroxypropyl cellulose, polyvinylchloride, carboxylated polyvinyl chloride, polyvinylfluoride, an ethylene oxide-containing polymer, polyvinylpyrrolidone, polyurethane, polytetrafluoroethylene, polyvinylidene fluoride, polyethylene, polypropylene, a styrene-butadiene rubber, an acrylated styrene-butadiene rubber, an epoxy resin, nylon, and the like, but are not limited thereto.

The conductive material is included to provide electrode conductivity. Any electrically conductive material may be used as a conductive material unless it causes a chemical change. Examples of the conductive material include a carbon-based material such as natural graphite, artificial graphite, carbon black, acetylene black, ketjen black, a carbon fiber, and the like; a metal-based material of a metal powder or a metal fiber including copper, nickel, aluminum, silver, and the like; a conductive polymer such as a polyphenylene derivative; or a mixture thereof.

The negative electrode and the positive electrode may be respectively manufactured by mixing each active material, a conductive material and a binder in a solvent to prepare an active material composition, and coating the composition on a current collector.

The electrode manufacturing method is well known, and thus is not described in detail in the present specification. The solvent includes N-methylpyrrolidone and the like, but is not limited thereto.

An electrolyte solution may be injected into the inside of the case housing the electrode assembly.

The electrolyte solution includes an organic solvent and a lithium salt.

The organic solvent serves as a medium for transmitting ions taking part in the electrochemical reaction of a battery. The organic solvent may be selected from a carbonate-based, ester-based, ether-based, ketone-based, alcohol-based, and aprotic solvent.

The carbonate-based solvent may include, for example dimethyl carbonate (DMC), diethyl carbonate (DEC), dipropyl carbonate (DPC), methylpropyl carbonate (MPC), ethylpropyl carbonate (EPC), ethylmethyl carbonate (EMC), ethylene carbonate (EC), propylene carbonate (PC), butylene carbonate (BC), and the like.

Particularly, when the chain carbonate compounds and cyclic carbonate compounds are mixed, an organic solvent having a high dielectric constant and a low viscosity may be provided. The cyclic carbonate compound and the chain carbonate compound are mixed together in a volume ratio ranging from about 1:1 to about 1:9.

Examples of the ester-based solvent may be methylacetate, ethylacetate, n-propylacetate, t-butylacetate, methylpropionate, ethylpropionate, $\gamma$-butyrolactone, decanolide, valerolactone, mevalonolactone, caprolactone, and the like. Examples of the ether-based solvent may be dibutylether, tetraglyme, diglyme, dimethoxyethane, 2-methyltetrahydrofuran, tetrahydrofuran, and the like, and examples of the ketone-based solvent may be cyclohexanone, and the like

Examples of the alcohol-based solvent may be ethanol, isopropyl alcohol, and the like.

The organic solvent may be used singularly or in a mixture of two or more, and when the organic solvent is used in a mixture of two or more, the mixture ratio may be controlled in accordance with a desirable cell performance.

The electrolyte solutionmay further include an overcharge-inhibiting additive such as ethylene carbonate, pyrocarbonate, and like.

The lithium salt is dissolved in an organic solvent, supplies lithium ions in a battery, basically operates the rechargeable lithium battery, and improves lithium ion transportation between positive and negative electrodes therein.

Examples of the lithium salt may be $LiPF_6$, $LiBF_4$, $LiSbF_6$, $LiAsF_6$, LiN $(SO_3C_2F_5)_2$, $LiN(CF_3SO_2)_2$, $LiC_4F_9SO_3$, $LiClO_4$, $LiAlO_2$, $LiAlCl_4$, $LiN(C_xF_{2x+1}SO_2)(C_yF_{2y+1}SO_3)$, wherein, x and y are natural numbers, LiCl, LiI, $LiB(C_2O_4)_2$ (lithium bis(oxalato) borate; LiBOB), or a combination thereof.

The lithium salt may be used in a concentration ranging from about 0.1 M to about 2.0 M. When the lithium salt is included within the above concentration range, an electrolyte may have excellent performance and lithium ion mobility due to optimal electrolyte conductivity and viscosity.

The separator of the electrode assembly may be any generally-used separator in a lithium battery which can separate a negative electrode and a positive electrode and provide a transporting passage for lithium ions. In other words, it may have low resistance to ion transport and excellent impregnation for an electrolyte solution. For example, it may be selected from glass fiber, polyester, polyethylene, polypropylene, polytetrafluoroethylene (PTFE), or a combination thereof. It may have a form of a non-woven fabric or a woven fabric. For example, in a lithium ion battery, a polyolefin-based polymer separator such as polyethylene and polypropylene is mainly used. In order to ensure the heat resistance or mechanical strength, a coated separator including a ceramic component or a polymer material may be used. Optionally, it may have a mono-layered or multi-layered structure.

Hereinafter, the embodiments are illustrated in more detail with reference to examples.

However, these examples are exemplary, and the present disclosure is not limited thereto. Furthermore, what is not described in this disclosure may be sufficiently understood by those who have knowledge in this field and will not be illustrated here.

Example 1 - not according to the invention

A positive active material layer composition was prepared by mixing $LiCoO_2$, polyvinylidene fluoride (PVDF), and carbon black in a weight ratio of 97:1.5:1.5 and dispersing the mixture in N-methyl-2-pyrrolidone. The positive active material layer composition was coated on a 12 $\mu$m-thick aluminum foil and then, dried and compressed to manufacture a positive electrode.

A negative active material layer composition was prepared by mixing graphite and styrene-butadiene rubber in a weight ratio of 98:2 and dispersing the mixture in water. The negative active material layer composition was coated on a 8 $\mu$m-thick copper foil and then, dried and compressed to manufacture a negative electrode.

An electrolyte solution was prepared by mixing ethylene carbonate (EC), propylene carbonate (PC), EMC, and DEC in a volume ratio of 25:5:40:30 and dissolving $LiPF_6$ in a concentration of 1.3 M in the mixed solvent.

The positive and negative electrodes were wound with a polyethylene separator to manufacture a jelly roll-shaped electrode assembly.

On the external surface of the electrode assembly, a double-layered tape was attached. The double-layered tape consisted of an acryl-based adhesion layer and a heat-bonding layer formed of elongated polypropylene (casted polypropylene, CPP) having a melting point of 85 °C (Daeyhun ST Co., Ltd.) on the adhesion layer. The tape was 25 $\mu$m thick in total, and herein, the adhesion layer was 5 $\mu$m thick, and heat-bonding layer was 20 $\mu$m thick.

The electrode assembly finished with the double-layered tape was housed in a pouch case, and then, the case was sealed after inserting the electrolyte solution into the case and heat-pressed at 120 °C under 100 kgf for about 3 seconds to manufacture a rechargeable lithium battery cell.

**Example 2**

A rechargeable lithium battery cell was manufactured according to the same method as Example 1 except for using a four-layered tape instead of the double-layered tape.

The four-layered tape consisted of a 5 $\mu$m-thick first adhesion layer formed of acryl-based rubber, a 7 $\mu$m-thick base layer formed of polyethylene terephthalate (PET) on the first adhesion layer, a 5 $\mu$m-thick second adhesion layer formed of acryl-based rubber on the base layer, and a 20 $\mu$m-thick heat-bonding layer formed of casted polypropylene on the second adhesion layer.

Example 3 - not according to the invention

A rechargeable lithium battery cell was manufactured according to the same method as Example 1 except for using a tape consisting of a 5 $\mu$m-thick adhesion layer formed of acryl-based rubber and a 50 $\mu$m-thick heat-bonding layer formed of a hot-melt resin having a melting point of 65 °C-75 °C (Tapex Pty. Ltd.).

The electrode assembly finished with the double-layered tape was housed in a pouch case, and then, the pouch case was sealed after inserting the electrolyte solution thereinto and heat-pressed at 65 °C under 100 kgf for about 3 seconds to manufacture a rechargeable lithium battery cell.

Example 4 - not according to the invention

A rechargeable lithium battery cell was manufactured according to the same method as Example 3 except for using a three-layered tape instead of the double-layered tape.

The three-layered tape consisted of a 5 $\mu$m-thick adhesion layer formed of acryl-based rubber, a 25 $\mu$m-thick base layer formed of elongated polypropylene (Oriented Polypropylene, OPP) on the adhesion layer, and a 20 $\mu$m-thick heat-bonding layer formed of a hot-melt (Tapex Pty Ltd.) on the base layer.

**Comparative Example 1**

The positive and negative electrodes according to Example 1 were wound with a polyethylene separator to manufacture a jelly roll-shaped electrode assembly.

On the external surface of the electrode assembly, an elongated polystyrene (oriented polystyrene, OPS) film (Tapex Pty. Ltd.) was attached. The OPS film had a melting point of 80 °C and was 56 $\mu$m thick.

The electrode assembly finished with the elongated polystyrene film was inserted into a pouch case, and then, the pouch case was sealed after injecting the electrolyte solution into the case to manufacture a rechargeable lithium battery cell.

### Evaluation 1: Properties of Tape

Properties of each tape according to Examples 1 to 4 and Comparative Example 1 were measured, and the results are shown in Table 1.

### [1] Measurement of Thermal Shrinkage Ratio

Each thermal shrinkage ratio in a machine direction (MD) and a transverse direction (TD) was calculated according to Equation 1.

$$[\text{Equation 1}]$$

$$\text{Thermal shrinkage ratio (\%)} = [(\text{LO-L1})/\text{LO}] \times 100$$

In Equation 1, LO denotes an initial length of a tape, and L1 denotes a length of the tape after allowed to stand at 100 °C for 2 minutes.

### [2] Adherence force Measurement of Case and Tape

The rechargeable lithium battery cells respectively adhered by the tapes according to Examples 1 to 4 and Comparative Example 1 were disassembled, and an adherence force of the tapes was measured through a push-pull gauge.

The adherence force was measured by respectively fixing the disassembled pouch cases on a jig, and respectively measuring the shear adhesive strength values after about 3 mm pulling the Al substrates by hanging Al substrates in the push-pull gage, and the width adhered between the pouch cases and the Al substrates. Herein, the adherence force (kgf/mm) was obtained by respectively dividing the shear adhesive strength values measured after hanging the Al substrates in the push-pull gauge and about 3 mm pulling them with the widths adhered between the pouch cases and the Al substrates.

### [3] Measurement of Adhesion strength

Each tape according to Examples 1 to 4 and Comparative Example 1 was adhered on a SUS plate, compressed by reciprocating a 2 kg roller at a speed of 300 mm/min, and allowed to stand under an isothermal-isohumidity condition (23 °C, 50 % RH) for 20 minutes. Then, adhesion strength was measured at a peeling speed of 300 mm/min and a peeling angle of 180 ° by using a universal test machine (UTM).

### [4] Measurement of Tensile Strength and Elongation Ratio

Tensile strength was measured by respectively making the tapes of Examples 1 to 4 and Comparative Example 1 into 10 mm*200 mm tensile strength specimens and using the universal test machine (UTM) at room temperature according to ASTM D-638. Herein, the universal test machine was set at a cross-head speed of 300 mm/min, and the gauge was set to have a length of 100 mm. Herein, the tensile strength is 10P/W*t, wherein P indicates a stress (kgf) when broken, W indicates width of a specimen (mm), and t indicates thickness (mm) of the specimen.

An elongation ratio was measured by manufacturing specimens in the same method as manufacturing the specimens for measuring the tensile strength. The specimens were used to measure the elongation ratio by using the UTM equipment. Herein, the elongation ratio (%) is expressed by $l-l_0/l*100$, wherein $l_0$ indicates an initial distance between jigs, and 1 indicates a distance between the jigs after breaking.

(Table 1)

| | | Example 1 | Example 2 | Example 3 | Example 4 | Comparative Example 1 |
|---|---|---|---|---|---|---|
| Thermal shrinkage ratio (%) | TD | 0 | 0 | 0 | 0 | 76 |
| | MD | 0 | 0 | 0 | 0 | 10 |
| Adherence between case and tape (kgf/25 mm) | | 1 | 1 | 1 | 0.6 | 0.4 |
| Adhesion strength (gf/mm$^2$) | | 700 | 700 | 500 | 500 | 700 |
| Tensile strength (kgf/cm$^2$) | | 400-450 | - | - | 618 | 936 |
| Elongation ratio (%) | | 440-500 | - | - | 151 | 76 |

Referring to Table 1, the tapes used to finish the electrode assemblies in Example 1 to 4 showed a less thermal shrinkage but a stronger adherence force to the case than the elongated polystyrene film used in Comparative Example 1. Accordingly, a tape having these properties may prevent a shrinkage of an electrode assembly at a high temperature or in an electrolyte solution and thus may prevent appearance defect of a battery cell.

**Evaluation 2: Adherence Force Evaluation of Rechargeable Lithium Battery Cell at Disassembly**

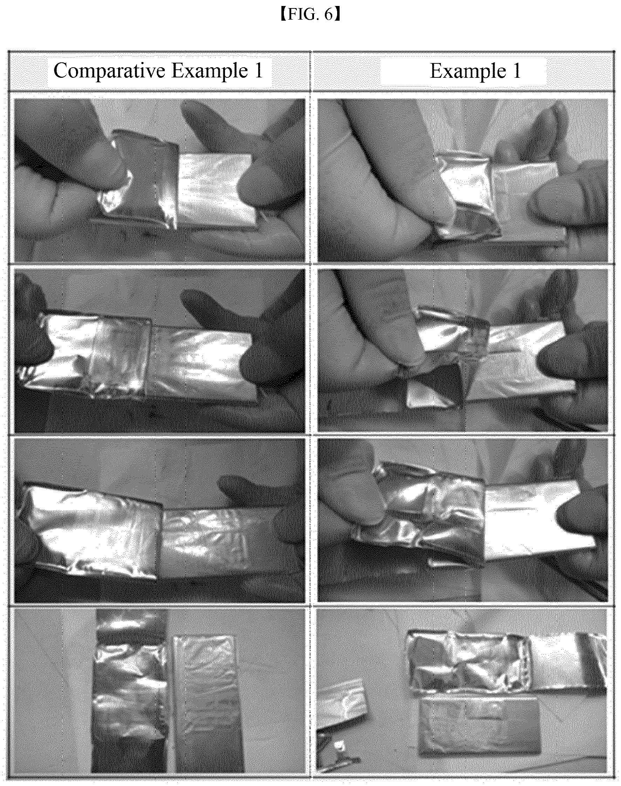

The rechargeable lithium battery cells according to Example 1 and Comparative Example 1 were disassembled and shown in FIG. 6.

FIG. 6 is a photograph showing the disassembled rechargeable lithium battery cells according to Example 1 and Comparative Example 1. For example, the photograph shows each adherence force between the electrode assemblies and the internal surface of the cases according to Example 1 and Comparative Example 1.

Referring to FIG. 6, Example 1 showed a stronger adherence force between the electrode assembly and the internal surface of the case than Comparative Example 1. Accordingly, a rechargeable lithium battery cell according to an embodiment may be suppressed from movement of an electrode assembly in a case and expected to be strong against an external impact.

**<Description of Symbols>**

| | | | |
|---|---|---|---|
| 100: | rechargeable lithium battery | 10: | electrode assembly |
| 13: | electrode tab | 15: | tape |
| 17: | case internal surface | 20: | pouch case |

**Claims**

1.   A rechargeable lithium battery (100), comprising

an electrode assembly (10) and
a case (20) housing the electrode assembly (10),
wherein the electrode assembly (10) and internal surfaces of the case (20) are thermally adhered by a tape (15) adhered to an external surface of the electrode assembly (10),
wherein the tape (15) includes
a first adhesion layer (21) having one surface adhered to the electrode assembly (10),
a base layer (22) disposed on the other surface of the first adhesion layer (21),
a second adhesion layer (23) having one surface adhered to the base layer (22), and
a heat-bonding layer (24) disposed on the other surface of the second adhesion layer (23) and thermally bonded to an internal surface of the case (20).

2.   The rechargeable lithium battery (100) of claim 1, wherein a thickness of the tape (15) ranges about 25 $\mu$m to about 55

μm.

3. The rechargeable lithium battery (100) of claim 1 or 2, wherein the tape (15) includes polyolefin.

4. The rechargeable lithium battery (100) of any one of claims 1-3, wherein each of thermal shrinkage ratios of the tape in a machine direction (MD) and a transverse direction (TD) according to Equation 1 is less than or equal to about 0 %:

[Equation 1]

$$\text{Thermal shrinkage ratio (\%)} = [(LO\text{-}L1)/LO] \times 100$$

wherein, in Equation 1, LO denotes an initial length of a tape and L1 denotes a length of a tape after being allowed to stand at 100 °C for 2 minutes.

5. The rechargeable lithium battery (100) of any one of claims 1-4, wherein adherence between the case (20) and the tape (15) ranges from about 4.903325 N /25 mm (0.5 kgf/25 mm) to 14.709975 N /25 mm (1.5 kgf/25 mm), wherein an adhesion strength of the tape (15) ranges from 2.943 N /25 mm$^2$ (300 gf/mm$^2$) to 7.848 N /25 mm$^2$ (800 gf/mm$^2$), wherein a tensile strength of the tape (15) ranges from 3922.66 N/cm$^2$ (400 kgf/cm$^2$) to about 6864.655 N/cm$^2$ (700 kgf/cm$^2$), and/or wherein an elongation ratio of the tape (15) ranges from about 100 % to about 750 %.

6. The rechargeable lithium battery (100) of claim 1, wherein each of the first adhesion layer (21) and the second adhesion layer (23) includes an acryl-based adhesive.

7. The rechargeable lithium battery (100) of claim 1, wherein a thickness of the heat-bonding layer (24) has a ratio of about 40 % to about 90 % relative to a total thickness of the tape (15).

8. The rechargeable lithium battery (100) of claim 1, wherein the base layer (22) includes a non-woven fabric, a polymer having a higher melting point than a polymer of the heat-bonding layer, or a combination thereof.

9. The rechargeable lithium battery (100) of claim 8, wherein the polymer having a higher melting point than the polymer of the heat-bonding layer includes at least one of polyethylene terephthalate (PET), polybutylene terephthalate (PBT), polypropylene (PP), polyimide (PI), and a liquid crystalline polymer (LCP) resin.

10. The rechargeable lithium battery (100) of claim 1, wherein the electrode assembly (10) further includes an outmost tape (16) adhered to an upper and/or lower surface of the electrode assembly (10).

11. The rechargeable lithium battery (100) of claim 1, wherein the tape (15) is disposed on a front, a rear, or a combination thereof of external surface of the electrode assembly (10).

**Patentansprüche**

1. Wiederaufladbare Lithiumbatterie (100), umfassend:

eine Elektrodenbaugruppe (10) und
ein Gehäuse (20), das die Elektrodenbaugruppe (10) aufnimmt,
wobei die Elektrodenbaugruppe (10) und die Innenflächen des Gehäuses (20) durch ein an einer Außenfläche der Elektrodenbaugruppe (10) haftendes Band (15) thermisch miteinander verbunden sind,
wobei das Band (15) Folgendes umfasst:

eine erste Klebeschicht (21), deren eine Oberfläche an der Elektrodenbaugruppe (10) haftet,
eine Basisschicht (22), die auf der anderen Oberfläche der ersten Klebeschicht (21) angeordnet ist,
eine zweite Klebeschicht (23), deren eine Oberfläche an der Basisschicht (22) haftet, und
eine Wärmebindungsschicht (24), die auf der anderen Oberfläche der zweiten Klebeschicht (23) angeordnet und thermisch mit einer Innenfläche des Gehäuses (20) verbunden ist.

2. Wiederaufladbare Lithiumbatterie (100) nach Anspruch 1, wobei eine Dicke des Bandes (15) zwischen etwa 25 μm

und etwa 55 μm liegt.

3. Wiederaufladbare Lithiumbatterie (100) nach Anspruch 1 oder 2, wobei das Band (15) Polyolefin enthält.

4. Wiederaufladbare Lithiumbatterie (100) nach einem der Ansprüche 1 bis 3, wobei jedes der Wärmeschrumpfungsraten des Bandes in Maschinenrichtung (MD) und Querrichtung (TD) gemäß Gleichung 1 kleiner oder gleich etwa 0% ist:

$$[\text{Gleichung } 1]$$

$$\text{Wärmeschrumpfungsrate } (\%) = [(LO-L1)/LO] \times 100$$

wobei in Gleichung 1 LO die Anfangslänge eines Bandes und L1 die Länge eines Bandes nach 2-minütigem Stehenlassen bei 100°C bezeichnet.

5. Wiederaufladbare Lithiumbatterie (100) nach einem der Ansprüche 1 bis 4, wobei die Haftkraft zwischen dem Gehäuse (20) und dem Band (15) im Bereich von etwa 4,903325 N/25 mm (0,5 kgf/25 mm) bis 14,709975 N/25 mm (1,5 kgf/25 mm) liegt, wobei die Haftfestigkeit des Bandes (15) im Bereich von 2,943 N/25 mm$^2$ (300 gf/mm$^2$) bis 7,848 N/25 mm$^2$ (800 gf/mm$^2$) liegt, wobei die Zugfestigkeit des Bandes (15) im Bereich von 3922,66 N/cm$^2$ (400 kgf/cm$^2$) bis etwa 6864,655 N/cm2 (700 kgf/cm$^2$) liegt und/oder wobei das Dehnungsverhältnis des Bandes (15) im Bereich von etwa 100% bis etwa 750% liegt.

6. Wiederaufladbare Lithiumbatterie (100) nach Anspruch 1, wobei jede von der ersten Klebeschicht (21) und der zweiten Klebeschicht (23) einen Klebstoff auf Acrylbasis enthält.

7. Wiederaufladbare Lithiumbatterie (100) nach Anspruch 1, wobei die Dicke der Wärmebindungsschicht (24) ein Verhältnis von etwa 40% bis etwa 90% relativ zur Gesamtdicke des Bandes (15) aufweist.

8. Wiederaufladbare Lithiumbatterie (100) nach Anspruch 1, wobei die Basisschicht (22) ein Vliesgewebe, ein Polymer mit einem höheren Schmelzpunkt als ein Polymer der Wärmebindungsschicht oder eine Kombination davon umfasst.

9. Wiederaufladbare Lithiumbatterie (100) nach Anspruch 8, wobei das Polymer mit einem höheren Schmelzpunkt als das Polymer der Wärmebindungsschicht mindestens eines von Polyethylenterephthalat (PET), Polybutylenterephthalat (PBT), Polypropylen (PP), Polyimid (PI) und einem flüssigkristallinen Polymer (LCP)-Harz umfasst.

10. Wiederaufladbare Lithiumbatterie (100) nach Anspruch 1, wobei die Elektrodenbaugruppe (10) ferner ein äußerstes Band (16) umfasst, das an einer oberen und/oder unteren Oberfläche der Elektrodenbaugruppe (10) haftet.

11. Wiederaufladbare Lithiumbatterie (100) nach Anspruch 1, wobei das Band (15) auf einer Vorderseite, einer Rückseite oder einer Kombination davon der Außenfläche der Elektrodenbaugruppe (10) angeordnet ist.

**Revendications**

1. Batterie rechargeable au lithium (100), comportant :

un ensemble électrode (10) ;
un boîtier (20) logeant l'ensemble électrode (10),
dans laquelle l'ensemble électrode (10) et des surfaces internes du boîtier (20) sont thermocollés par une bande (15) collée à une surface externe de l'ensemble électrode (10),
dans laquelle la bande (15) inclut
une première couche d'adhérence (21) présentant une surface collée à l'ensemble électrode (10),
une couche de base (22) disposée sur l'autre surface de la première couche d'adhérence (21),
une deuxième couche d'adhérence (23) présentant une surface collée à la couche de base (22), et
une couche de liaison thermique (24) disposée sur l'autre surface de la deuxième couche d'adhérence (23) et liée thermiquement à une surface interne du boîtier (20).

**2.** Batterie rechargeable au lithium (100) selon la revendication 1, dans laquelle une épaisseur de la bande (15) varie d'environ 25 μm à environ 55 μm.

**3.** Batterie rechargeable au lithium (100) selon la revendication 1 ou 2, dans laquelle la bande (15) inclut une polyoléfine.

**4.** Batterie rechargeable au lithium (100) selon l'une quelconque des revendications 1 3, dans laquelle chacun des rapports de contraction par refroidissement de la bande dans une direction machine (MD) et une direction transversale (TD) selon l'équation 1 est inférieur ou égal à environ 0 % :

Rapport de contraction par refroidissement (%) - [(LO-L1)/LO] X 100                    [Équation 1]

dans laquelle, dans l'équation 1, LO désigne une longueur initiale d'une bande et L1 désigne une longueur d'une bande après un repos à 100 °C pendant 2 minutes.

**5.** Batterie rechargeable au lithium (100) selon l'une quelconque des revendications 1 4, dans laquelle l'adhérence entre le boîtier (20) et la bande (15) varie d'environ 4,903325 N/25 mm (0,5 kgf/25 mm) à 14,709975 N/25 mm (1,5 kgf/25 mm), dans laquelle une force d'adhérence de la bande (15) varie de 2,943 N/25 mm$^2$ (300 gf/mm$^2$) à 7,848 N/25 mm$^2$ (800 gf/mm$^2$), dans laquelle une résistance à la traction de la bande (15) varie de 3 922,66 N/cm$^2$ (400 kgf/cm$^2$) à environ 6 864,655 N/cm$^2$ (700 kgf/cm$^2$), et/ou dans laquelle un rapport d'allongement de la bande (15) varie d'environ 100 % à environ 750 %.

**6.** Batterie rechargeable au lithium (100) selon la revendication 1, dans laquelle chacune de la première couche d'adhérence (21) et de la deuxième couche d'adhérence (23) inclut un adhésif à base d'acrylique.

**7.** Batterie rechargeable au lithium (100) selon la revendication 1, dans laquelle une épaisseur de la couche de liaison thermique (24) présente un rapport d'environ 40 % à environ 90 % par rapport à une épaisseur totale de la bande (15).

**8.** Batterie rechargeable au lithium (100) selon la revendication 1, dans laquelle la couche de base (22) inclut un tissu non tissé, un polymère présentant un point de fusion plus élevé qu'un polymère de la couche de liaison thermique ou une combinaison de ceux-ci.

**9.** Batterie rechargeable au lithium (100) selon la revendication 8, dans laquelle le polymère présentant un point de fusion plus élevé que le polymère de la couche de liaison thermique inclut au moins l'un parmi le polyéthylène téréphtalate (PET), le polybutylène téréphtalate (PBT), le polypropylène (PP), un polyimide (PI) et une résine de polymère cristallin liquide (LCP).

**10.** Batterie rechargeable au lithium (100) selon la revendication 1, dans laquelle l'ensemble électrode (10) inclut en outre une bande la plus externe (16) collée à une surface supérieure et/ou inférieure de l'ensemble électrode (10) .

**11.** Batterie rechargeable au lithium (100) selon la revendication 1, dans laquelle la bande (15) est disposée sur un avant, un arrière ou une combinaison de ceux-ci d'une surface externe de l'ensemble électrode (10).

【FIG. 1】

100

17

10

15

20

13

【FIG. 2】

15

12

11

【FIG. 3】

15

24

23

22

21

【FIG. 4】

15

33

32

31

【FIG. 5】

13

16

10

15

16

【FIG. 6】

| Comparative Example 1 | Example 1 |
|---|---|

**EP 3 300 133 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2016080143 A1
- US 2016043361 A1
- US 2012115025 A1
- JP 2007154135 A
- EP 2822058 A1